# EUROPEAN PATENT APPLICATION

(11) **EP 1 734 773 A1**
(43) Date of publication of application: **20.12.2006**
(21) Application number: 05291278.9
(22) Date of filing: 14.06.2005
(51) Int. Cl.: H04Q 7/36

(54) **A method for uplink interference coordination in single frequency networks, a base station a mobile terminal and a mobile network therefor**

(71) Applicant: ALCATEL, 75008 Paris (FR)
(72) Inventor: Gerlach, Christian, Dr., 71254 Ditzingen (DE); Haberland, Bernd, 70186 Stuttgart (DE)
(74) Representative: Brose, Gerhard

(57) **Abstract**

The invention concerns a method for coordination of the interference in the uplink between cells (C1,C6) of a single frequency network with the frequency band used for uplink being subdivided into at least two subsets (F1 F2...FR), whereby a dedicated subset (F1) of said at least two subsets (F1 F2...FR) is selected to be burdened more by inter-cell interference and is allocated under observation of the strong inter-cell interference in this dedicated subset to mobile terminals located in a first cell (C1), and mobile terminals (T2) located in the border area of a second cell (C6) of said cells neighbored to the first cell and causing the strongest interference in said first cell (C1) are based on further network criteria tried to be scheduled to said dedicated subset (F1), a base station, a mobile terminal and a mobile network therefor.

## Description

The invention relates to a method for coordination of the interference in the uplink according to the preamble of claim 1, a base station according to the preamble of claim 7, a mobile terminal according to the preamble of claim 8 and a mobile network according to the preamble of claim 9.

Orthogonal uplink transmission schemes such as Orthogonal Frequency Division Multiplexing (OFDM), single carrier Frequency Division Multiple Access (FDMA) or distributed FDMA such as interleaved FDMA with multiple terminals will become increasingly important e.g. for future evolutions of air interfaces for mobile radio systems. Those radio systems are currently under discussion e.g. in Third Generation Partnership Project (3GPP) Technical Specification Group (TSG) Radio Access Network (RAN), for Wireless Local Area Networks (WLANs) e.g. according to standard IEEE 802.11a, or for a 4^{th} generation air interface.

Given the licensed bandwidth, transmission capacity from network providers e.g. for picture uploading or video communication has to be as high as possible for all users to serve as many subscribers as possible. Further the quality of service experienced by the user and especially the coverage of the service is an important property demanded by the user. So an uplink access scheme shall work well at the cell borders of a single frequency network (SFN).

In cellular systems with a frequency reuse factor of 1 the signal to interference ratio at the cell border can approach the factor 1 or 0 dB, so that no useful transmission from a mobile terminal to the base station can be kept up if a mobile terminal from a neighboring cell is near to the considered mobile terminal and sends with the same power on the same frequencies.

Therefore in CDMA (CDMA = Code Division Multiple Access) a soft handover exists and the mobile terminals always use a different (terminal specific) scrambling code in the uplink. The reception is then possible using the spreading gain from CDMA. As is known due to the strong interference the uplink capacity is considerably limited.

In OFDM transmission, frequency groups are allocated to a mobile terminal instead of codes in CDMA transmission. In other FDMA orthogonal uplink schemes, frequencies are also allocated in the uplink to a mobile terminal. So in these schemes in contrast to CDMA transmission, interference can be planned and avoided. For these orthogonal uplink transmission schemes the problem at the cell border has to be solved as well.

Up to now, frequency planning for the cells is possible by means of giving each whole cell a distinct frequency band.

However, frequency distribution to the different cells reduces the available uplink resources per cell very considerably e.g. by a factor of 1/3 or 1/7 and thus the overall system throughput. It is a waste of resources for the inner area of a cell.

A frequency reuse of e.g. 1/3 only in the outer part of the cell is possible but still wastes too much resources.

The object of the invention is to propose a method for coordination of the interference in the uplink between cells of a single frequency network offering a good usage of the available uplink resources.

This object is achieved by a method according to the teaching of claim 1, a base station according to the teaching of claim 7, a mobile terminal according to the teaching of claim 8 and a mobile network according to the teaching of claim 9.

The main idea of the invention is to subdivide the uplink frequency band in subsets and to schedule in each cell the mobile terminals in uplink so to concentrate inter-cell interference on other base stations on e.g. one dedicated subset in each cell and reduce this way the interference in the other subsets.. It is assumed that there is almost no interference between the different subsets.

An uplink channel is designed so that a mobile terminal that is interfering on other base stations is identified e.g. by cell specific pilots emitted by the mobile terminal and recorded. Base stations that sense the interference send reports to the serving base station of the mobile terminal. The reports about the disturbance by interference are gathered in the serving base station and the mobile terminal's uplink is scheduled by the serving base station in order to avoid the biggest disturbance and to help the strongest affected base station. Thus, the mobile terminal gets allocated to a dedicated subset to which the strongest affected base station does not schedule its own mobile terminals or only schedules them if they are very near to its antenna.

So the uplink interference in the strongest affected base station is reduced on all other subsets besides the dedicated subset this way allowing a mobile terminal to use these other subsets in the border region of the strongest affected cell with reduced interference, so that a useful transmission can be kept up.

In order to avoid extensive signaling of interference disturbance reports, in a variant of the invention the mobile terminals can also on their own predict in advance in which cell they will create disturbance based on the approximation that their downlink interference or path loss measurement is reciprocal to their uplink interference generation. The mobile terminal will then demand appropriate uplink scheduling to create interference only in the dedicated subset, i.e. in the restricted frequency group, of the disturbed cell. This also results in a reduction of the uplink interference on each base station in the not restricted resources.

If in case of receive diversity, i.e. beamforming, the interference is seen only from one or few interfering mobile terminals, the base station can also try to evade the interference and try to schedule its mobile terminal on a less disturbed subset which is in principle the same as adaptive subcarrier allocation.

In the inner area of a cell that is near to the base station, all subsets, i.e. all frequencies, can be used and due to limited interference from other cell's mobile terminals the dedicated power level does not need to be exceeded. So all frequencies are evenly used over the area giving an optimum resource usage for evenly distributed mobile terminals.

Further developments of the invention can be gathered from the dependent claims and the following description.

In the following the invention will be explained further making reference to the attached drawings.

Fig. 1 schematically shows the interference situation in the uplink at the border between two cells in a single frequency network.

Fig. 2 schematically shows the partitioning of an OFDM or single carrier FDMA frequency band in disjoint subsets and the power limitation of a dedicated subset in uplink.

Fig. 3 schematically shows a hexagonal cell pattern with allocation of dedicated subsets to terminals in border region.

Fig. 4 schematically shows a sectorized cell pattern with allocation of dedicated subsets to terminals in border region in uplink.

Fig. 5 schematically shows the cell specific uplink pilots in OFDM transmission.

A mobile network according to the invention comprises mobile terminals and base stations.

Each of said mobile terminals is connected to one or multiple of said base stations, and the base stations are in turn connected via base station controllers to a core network.

The mobile terminals comprise the functionality of a mobile terminal for transmission and reception in a single frequency network as e.g. an OFDM network, i.e. they can be connected to a mobile network by means of a base station.

Furthermore, a mobile terminal according to the invention comprises means for evaluating in which cell or region of a cell it creates interferences by means of downlink interference or path loss measurements, and the mobile terminal comprises means for demanding to be scheduled to a dedicated subset of the cell or region of the cell in which it creates the strongest interferences.

The base stations comprise the functionality of a base station of a single frequency network as e.g. a WLAN or an OFDM network, i.e. they provide the possibility for mobile terminals to get connected to the mobile network.

Furthermore, the base station according to the invention comprises means for identifying by means of dedicated cell specific signals, like e.g. pilots or training sequences, transmitted from mobile terminals from which cell or region of a cell an interference stems from, for sending to another base station a notification about an interference, for finding out by means of its history or further information about its terminal such as geographic information from which mobile terminal an interference was caused, for comparing the notifications from several base stations about interference, and for scheduling a mobile terminal to the dedicated subset of the cell or the region of the cell that experiences the strongest interference caused by said mobile terminal.

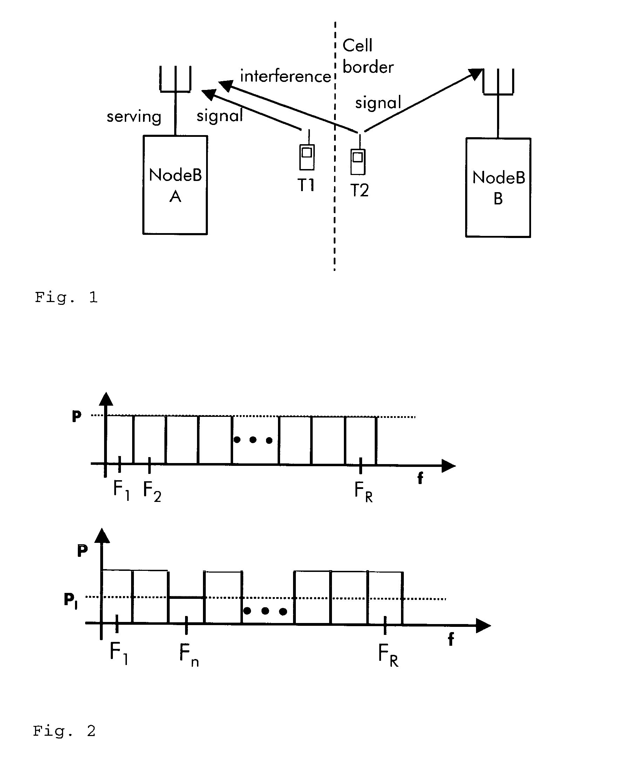

In the following, by way of example the method according to the invention is described in detail making reference to figs. 1 to 5.

The method according to the invention is described for an OFDM transmission for UTRAN enhancement (UTRAN = Universal Mobile Telecommunication System Terrestrial Radio Access Network), but the invention could also be used e.g. for a single carrier system with cyclic prefix and frequency domain equalization or other FDMA system, where the different carriers are distributed to the mobile terminals.

Fig. 1 shows the interference situation in the uplink in a single frequency multi-cell OFDM network that comprises by way of example two base stations NodeB A and NodeB B and two mobile terminals T1 and T2.

The mobile terminal T1 is connected to the base station NodeB A, i.e. the base station NodeB A is the serving base station for the mobile terminal T1 which is depicted by an arrow from the mobile terminal T1 to the base station NodeB A. As the mobile terminal T2 is located near the cell border of the cell that is served by the base station NodeB A, which is depicted by a dotted line, the base station NodeB A notices interference from mobile terminal T2, which is depicted by an arrow from the mobile terminal T2 to the base station NodeB A.

If synchronization for the cells can not be assumed, interference avoidance has to be based only on distribution of different frequencies and not on distribution of different time slots.

For wideband CDMA (WCDMA) transmission in UMTS (UMTS = Universal Mobile Telecommunication System), resources that are allocated to the mobile terminals are never without interference, so there is no particular problem for a mobile terminal when entering a new cell to still go on using its scrambling and channelization code.

In OFDM as in CDMA transmission also soft handover using diversity could be performed for mobile terminals in the overlapping region of two cells. But in OFDM in contrast to CDMA transmission, the used carrier signals are strictly orthogonal. So if a mobile terminal T2 uses a resource in cell B and enters into cell A, these resources are usually already taken by one or multiple other mobile terminals in cell A. These one or multiple other mobile terminals are now disturbed by the interference of mobile terminal T2. If there is exactly one disturbed mobile terminal, the two competing mobile terminals could be distinguished by the channel coding which means that the interference would again be spread and this limits the channel capacity for both.

The task is now to find a solution for such an OFDM or single carrier system with frequency domain equalization to work with frequency reuse of 1 and preferably without soft handover and coordinate the interference in uplink.

The invention is based on partitioning the frequency band into subsets. Fig. 2 shows in the upper part a number of R disjoint subsets F1 F2...FR along the frequency axis f. All these subsets can have the same maximum power value along the power axis p, i.e. all subsets are used with the same maximum power. These subsets may contain frequency diverse frequency patterns to be robust against a frequency selective fading channel. For simplicity they are depicted as blocks over the frequency axis f as given in fig. 2.

In an embodiment of the invention, a power planning for the uplink use of subsets out of the frequency bands by the mobile terminals of a specific cell is proposed. Depending on to which cell a mobile terminal belongs, in the uplink a dedicated subset can only be used with a limited power in the cell.

This power restriction is illustrated in the lower part of fig. 2. Here, it can be seen that the dedicated subset Fn can only be used maximally with the limited power pl.

If a mobile terminal uses a certain subset for data transmission to its base station, it can happen that this certain subset is also used in the neighbor cell or sector for another uplink connection. So e.g. if mobile terminal T1 in fig. 1 uses the certain subset to send to base station NodeB A and near to the cell border of the cell the mobile terminal T2 in a neighbor cell uses this same certain subset to transmit to base station NodeB B the base station NodeB A experiences interference from T2 if it tries to receive the subset from its client mobile terminal T1.

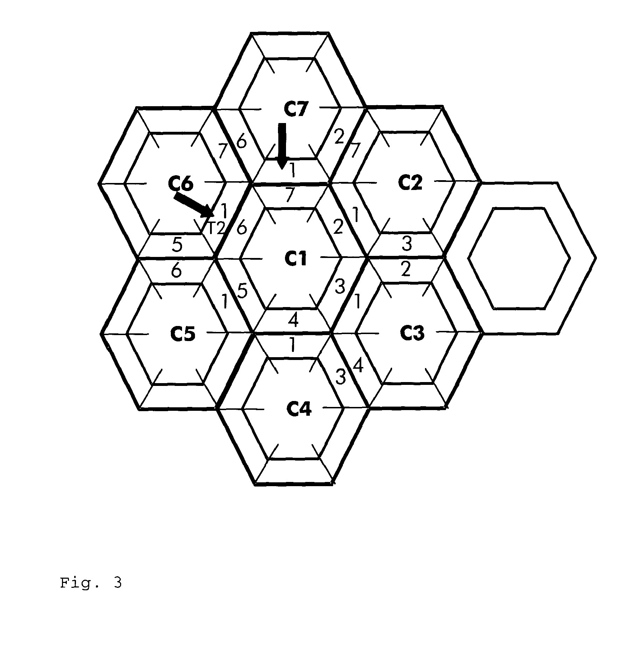

The invention with interference power planning can be illustrated for omni-directional antennas and hexagonal cells as given in fig. 3. for the case of R=7.

The cells are denoted Cn with the number n indicating the dedicated subset Fn of the respective cell, and the subsets Fk that are used in the border regions of the cells are denoted with numbers k. In the inner area of the cells, all subsets are used for uplink.

In an embodiment of the invention, the respective dedicated subset Fn is only used with limited power according to fig. 2.

By choosing R=7, it is achieved that a cell is surrounded by neighbors with a different cell number n, i.e. with a different dedicated subset Fn.

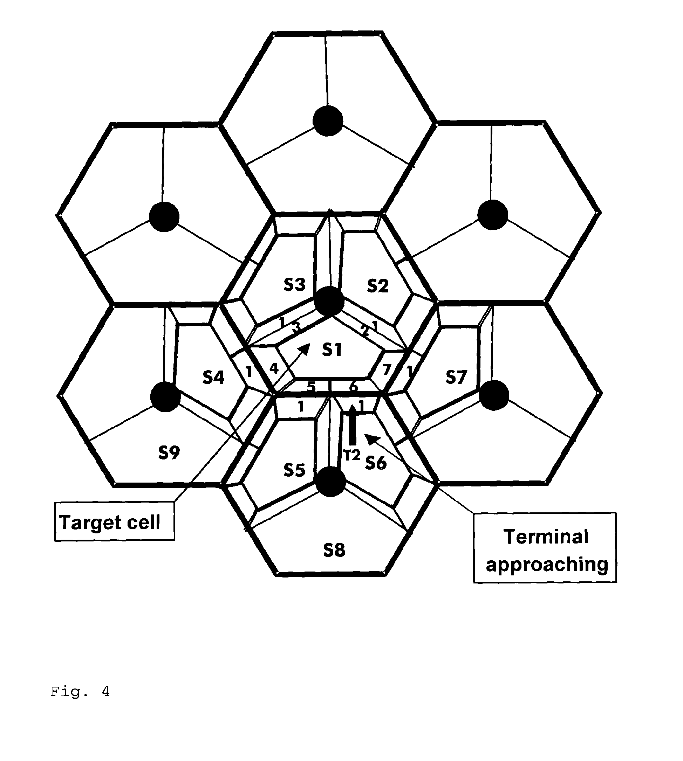

An analogue scenario is depicted in fig. 4. Here, the interference power planning is illustrated for sectorized hexagonal cells for the exemplary case of R=9.

The sectors are denoted Sn with n indicating the dedicated subset Fn of the respective sector, and the subsets Fk that are used in the border regions of the sectors are denoted with the number k. In the inner area of the sectors, all subsets are used for uplink but the respective dedicated subset Fn is burdened more by interference and can only be used under observation of the strong inter-cell interference inside this inner area.

In an embodiment of the invention, the respective dedicated subset Fn is only used with limited power according to fig. 2.

If in case of OFDM transmission the mobile terminals in a cell use different subsets to achieve multiplexing of the mobile terminals, each subset or mobile terminal must have a specific pilot, i.e. a specific signal, so that the base station is capable to do channel equalization for each mobile terminal individually.

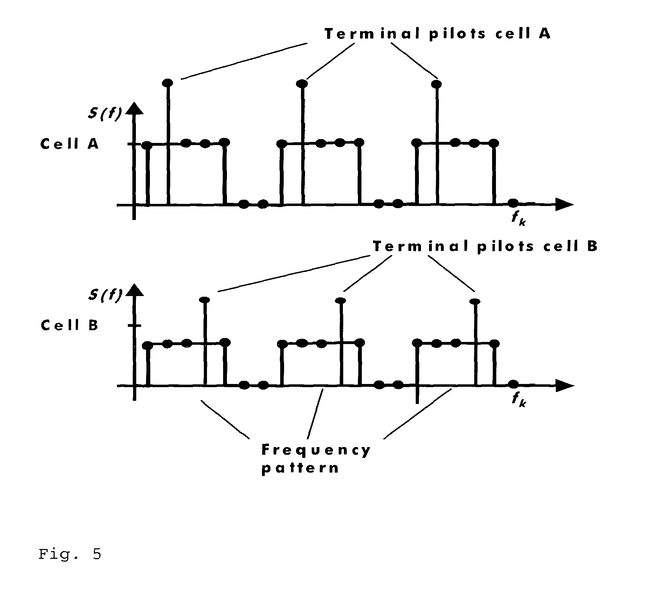

In a preferred embodiment of the invention the base station identifies from which cell's mobile terminal in one time-frequency or frequency pattern the e.g. strongest interference stems from. This can be realized e.g. by positioning terminal pilots in the time-frequency or frequency patterns in the uplink at positions that are cell or sector specific and differ between neighbor cells or sectors. This scenario is sketched in fig. 5.

In fig. 5, for frequency patterns, i.e. subsets, along the frequency axis f, the signal levels are depicted along the signal axis S(f). In each frequency pattern, there is a terminal pilot having an amplitude level different from the absolute amplitude level used for data transmission.

In the upper part of fig. 5, the frequency patterns for a cell A and in the lower part, the frequency patterns for a cell B are depicted. The terminal pilots have different positions on the frequency axis for the frequency patterns in cell A and cell B, which can be used to identify the serving cell of a mobile terminal.

In another embodiment of the invention for a single carrier FDMA system the cell identification can be realized by using training sequences in uplink that are cell specific.

The base station identifies from which cell on which frequency pattern at what time the interference comes and with what strength or damage it comes. It then contacts the serving base station for an identified maybe worst disturbing cell.

In fig. 1 of our example, the base station NodeB A identifies that the interference caused by mobile terminal T2 is coming from the cell that is served by base station NodeB B and the base station NodeB A contacts base station NodeB B e.g. via the Radio Network Controller (RNC) or directly.

With that information or further information about its terminals such as geographic information the base station NodeB B is able to find out from which of its mobile terminals the interference was sent out by means of looking at its history. It then combines the interference reports from other disturbed base stations for that mobile terminal T2.

In fig. 3 and 4 of our example, interfering mobile terminals, like mobile terminal T2 using e.g. subset F2 for uplink, that approach and disturb cell C1 in fig. 3 and sector S1 in fig. 4 resp. are depicted as arrows.

The base station with the strongest interference strength or highest damage, in our example base station of cell C1 or sector S1, is helped now under observation of some other conditions such as load or network criteria if possible by scheduling the mobile terminal T2 on frequency patterns of the dedicated subset F1 of cell C1 or sector S1. This removes the interference on the subset F2 used before, which can now be used in cell C1 or sector S1 uplink with improved signal to noise ratio.

Therefore, if the method according to the invention described above is applied for all cells or sectors, as depicted in fig. 3 and fig. 4, the subsets Fk that are used in the border regions of a cell or a sector and that are denoted k are the dedicated subsets that are selected to be burdened with inter-cell interference of thecell or sector with the strongest interference strength or highest damage.

In our example, it is assumed that the closest neighbor cell or sector is the one with the strongest interference strength or highest damage as described above. However, the invention is not limited to this case.

As one can see from fig. 3 and fig. 4, if one marks the border regions from all cells also with the used subset number k, all frequencies in uplink are evenly used over the area of multiple cells with full symmetry giving a near optimum resource usage for evenly distributed mobile terminals assuming isotropic propagation conditions.

Additionally, looking at the surrounding of cell C1 in fig. 3, the subset F1 is used from all surrounding mobile terminals from neighbor cells. So as is the goal, the interference from the outside mobile terminals on the base station of cell C1 is concentrated on the subset F1 and reduced on the other subsets.

In an embodiment of the invention, to protect the method according to the invention against failures, a mobile terminal that belongs to cell Cn or sector Sn observes a power limitation for the dedicated subset Fn or is scheduled so that Fn is only emitted with limited power pl by the mobile terminal. This limited power pl should be chosen with view to the situation at the cell border where the desired signal and interference is approximately equally attenuated. So this value should guarantee that mobile terminals from cell Cn or sector Sn can not disturb the uplink transmission of neighbor mobile terminals that are scheduled in a neighbor cell or sector exactly on patterns of the subset Fn and are located near the cell or sector border. In consequence, the subset Fn inside cell Cn or sector Sn can only be used by mobile terminals near to the antenna of cell Cn or sector Sn, i.e. in the inner area of cell Cn or sector Sn, and interference on the subset Fn coming from mobile terminals of neighbor cells or sectors can be tolerated to a considerable extent.

In an embodiment of the invention, in order to avoid extensive signaling of interference damage reports, the mobile terminals can also on their own predict in advance in which cells they will create damage based on the approximation that their downlink interference measurement is reciprocal to their uplink interference generation.

A mobile terminal, e.g. mobile terminal T2 in fig. 1 will then signal its serving base station, e.g. NodeB B the measurements about the downlink interference and will then demand appropriate uplink scheduling to the dedicated subset of the disturbed cell or sector to create interference only in the restricted frequency group, i.e. in the dedicated subset of the disturbed cell or sector.

This also results in a reduction of the uplink interference on each base station in the not restricted resources and does not need signaling between base stations.

With the proposed uplink interference coordination, all frequencies are unaffected in the inner area of a cell or a sector. Restrictions by network planning and coordination only take place in the border areas where the availability of the frequencies is only slightly, e.g. to 6/7 in case of fig. 3, and not massively, as e.g. to 1/7 in case of no frequency reuse, reduced.

By using the proposed invention an OFDM system or a single carrier FDMA system can have full cell coverage for all and especially moving mobile terminals.

Further the solution helps in avoiding the need for macro diversity since the serving range of the mobile is increased.

## Claims

1. A method for coordination of the interference in the uplink between cells (C1,C6) of a single frequency network with the frequency band used for uplink being subdivided into at least two subsets (F1 F2...FR), **characterized in, that**
• a dedicated subset (F1) of said at least two subsets (F1 F2...FR) is selected to be burdened more by inter-cell interference and is allocated under observation of the strong inter-cell interference in this dedicated subset to mobile terminals located in a first cell (C1) or a region of the first cell (S1) of said cells,
• and mobile terminals (T2) located in the border area of a second cell (C6) of said cells neighbored to the first cell and causing the strongest interference in said first cell (C1) or said region of the first cell (S1) are based on further network criteria tried to be scheduled to said dedicated subset (F1).

2. A method according to claim 1, **characterized in, that** said mobile terminals located in the first cell (C1) or a region of the first cell (S1) of said cells use said dedicated subset (F1) of said at least two subsets (F1 F2...FR) with a limited power (pl) that guarantees that the uplink transmission of said mobile terminals of the second cell (C6) of said cells neighbored to the first cell that also use said dedicated subset (F1) is not disturbed by the uplink transmission of said mobile terminals of the first cell (C1) and still allows the uplink transmission of said mobile terminals of the first cell (C1).

3. A method according to claim 1, **characterized in, that**
• the neighbor cells (C2-C7) of said first cell (C1) have each at least one dedicated subset of said at least two subsets (F1 F2...FR) different from at least one of the at least one dedicated subset (F1) of said at least two subsets (F1 F2...FR) of the first cell (C1),
• and mobile terminals located in an inner area of a cell of one of the neighbor cells (C2-C7) or the first cell (C1) use the respective dedicated subset of said at least two subsets (F1 F2...FR) only with a limited power (pl).

4. A method according to claim 1, **characterized in, that**
• said first and second cell (C1,C6) are sectorized cells having different dedicated subsets (F1 F6) of said at least two subsets (F1 F2...FR) for the inner area of neighbored sectors (S1,S6),
• mobile terminals located in the inner area of a sectorized cell (C1,C6) use the respective dedicated subset (F1 F6) of said at least two subsets (F1 F2...FR) only with a limited power (pl),
• and a mobile terminal (T2) located in the second cell (C6) in the border region of a sector (S6) is scheduled to the dedicated subset (F1) that relates to the sector in which the strongest interference is caused by said mobile terminal (T2).

5. A method according to claim 3, **characterized in, that**
• the base station of a cell (NodeB A) can identify by means of dedicated cell specific or cell region specific signals transmitted from mobile terminals (T2) from which other cell or region of a cell an interference stems from,
• said base station (NodeB A) sends to the base station (NodeB B) of the cell from which said interference stems from a notification about the interference,
• the base station (NodeB B) of the cell from which said interference stems from finds out by means of its history or additional information about their terminals from which mobile terminal the interference was caused,
• the base station (NodeB B) of the cell from which said interference stems compares the notifications from several base stations about the interference caused by said mobile terminal (T2),
• and the base station (NodeB B) of the cell from which said interference stems schedules the mobile terminal (T2) from which the interference was caused to the dedicated subset (F1) of the cell (C1) or the region of the cell (S1) that experiences the strongest interference caused by said mobile terminal (T2).

6. A method according to claim 3, **characterized in, that**
• a mobile terminal (T2) evaluates in which cell (C1) or region of a cell (S1) it creates interferences by means of downlink interference or path loss measurements,
• and demands to be scheduled to the dedicated subset (F1) of the cell (C1) or region of the cell (S1) in which it creates the strongest interferences.

7. A base station (NodeB A, NodeB B) for coordination of the interference in the uplink between cells (C1-C7) of a single frequency network with the frequency band used for uplink being subdivided into at least two subsets (F1 F2...FR) , **characterized in, that**
• the base station (NodeB A, NodeB B) comprises means for identifying by means of dedicated cell specific signals transmitted from mobile terminals (T2) from which cell (C6) or region of a cell (S6) an interference stems from,
• the base station (NodeB A, NodeB B) comprises means for sending to another base station (NodeB A, NodeB B) a notification about an interference,
• the base station (NodeB A, NodeB B) comprises means for finding out by means of its history or additional information about their terminals from which mobile terminal (T2) an interference was caused,
• the base station (NodeB A, NodeB B) comprises means for comparing the notifications from several base stations about interference,
• and the base station (NodeB A, NodeB B) comprises means for scheduling a mobile terminal (T2) to the dedicated subset (F1) of the cell (C1) or the region of the cell (S1) that experiences the strongest interference caused by said mobile terminal (T2).

8. A mobile terminal (T2) for coordination of the interference in the uplink between cells (C1-C7) of a single frequency network with the frequency band used for uplink being subdivided into at least two subsets (F1 F2...FR), **characterized in, that**
• the mobile terminal (T2) comprises means for evaluating in which cell (C1) or region of a cell (S1) it creates interferences by means of downlink interference or path loss measurements,
• and the mobile terminal (T2) comprises means for demanding to be scheduled to the dedicated subset (F1) of the cell (C1) or region of the cell (S1) in which it creates the strongest interferences.

9. A mobile network comprising base stations (NodeB A, NodeB B) according to claim 6 or mobile terminals (T2) according to claim 7 for performing a method according to claim 1.

## Amended claims

### Amended claims in accordance with Rule 86(2) EPC.

**1.** A method for coordination of the interference in the uplink between cells (C1,C6) of a single frequency network with the frequency band used for uplink being subdivided into at least two subsets (F1 F2...FR), **characterized in, that**
• a dedicated subset (F1) of said at least two subsets (F1 F2...FR) is selected to be burdened more by inter-cell interference and is allocated under observation of the strong inter-cell interference in this dedicated subset to mobile terminals located in a first cell (C1) or a region of the first cell (S1) of said cells,
• and mobile terminals (T2) located in the border area of a second cell (C6) of said cells neighbored to the first cell and causing the strongest interference in said first cell (C1) or said region of the first cell (S1) are, based on further network criteria, tried to be scheduled to said dedicated subset (F1).
